# EUROPÄISCHE PATENTANMELDUNG

(11) **EP 0 945 326 A2**
(43) Veröffentlichungstag der Anmeldung: **29.09.1999**
(21) Anmeldenummer: 99104342.3
(22) Anmeldetag: 04.03.1999
(51) Int. Cl.: B62B 3/18

(54) **Stapelbarer Einkaufswagen**

(30) Priorität: 27.03.1998 DE 19813685
(71) Anmelder: Brüder Siegel GmbH + Co. KG Draht- und Metallwarenfabrik, 89340 Leipheim (DE)
(72) Erfinder: Amberg, Udo, 89171 Illerkirchberg (DE); Zoua, Ambroise, 86159 Augsburg (DE)
(74) Vertreter: Grättinger & Partner (GbR)

(57) **Zusammenfassung**

Im rückwärtigen Bereich eines stapelbaren Einkaufswagens mit einem Fahrgestell, einem auf diesem befestigten Warenbehälter und einer rückwärtigen Schiebeeinrichtung ist eine für die Beförderung von Großgebinden geeignete Ablage vorgesehen. Diese kann eine Gebrauchsstellung und eine Nichtgebrauchsstellung einnehmen. Sie umfaßt ein Tragelement (8) mit einem Abstellabschnitt (9) und einen um eine horizontale Achse (3) verschwenkbar an dem Fahrgestell angelenkten Anschlagbügel (4) mit zwei seitlichen Schenkeln (5) und einem diese verbindenden Querdraht (6). Der Abstellabschnitt (9) des Tragelements (8) liegt in der Gebrauchsstellung der Ablage zumindest bereichsweise tiefer als die seitlichen Schenkel (5) und der Querdraht (6) des Anschlagbügels (4). Das Tragelement (8) ist um eine horizontale Achse (7) verschwenkbar mit dem Anschlagbügel (4) verbunden.

## Beschreibung

Die vorliegende Erfindung betrifft einen stapelbaren Einkaufswagen mit einem Fahrgestell, einem auf diesem befestigten Warenbehälter und einer rückwärtigen Schiebeeinrichtung, wobei im rückwärtigen Bereich des Einkaufswagens eine für die Beförderung von Großgebinden geeignete Ablage vorgesehen ist, die eine Gebrauchsstellung und eine Nichtgebrauchsstellung einnehmen kann und ein Tragelement mit einem Abstellabschnitt und einen um eine horizontale Achse verschwenkbar an dem Fahrgestell angelenkten Anschlagbügel mit zwei seitlichen Schenkeln und einem diese verbindenden Querdraht umfaßt, wobei der Abstellabschnitt des Tragelements in der Gebrauchsstellung der Ablage zumindest bereichsweise tiefer liegt als die seitlichen Schenkel und der Querdraht des Anschlagbügels.

Einkaufswagen, wie sie insbesondere in Selbstbedienungsmärkten den Kunden zur Verfügung gestellt werden, sind häufig in ihrem rückwärtigen Bereich mit einer Ablage für Getränkekisten oder andere Großgebinde ausgestattet. Derartige Ablagen für Großgebinde wurden insbesondere unter dem Gesichtspunkt des Komforts für den Kunden entwickelt; denn das Hereinheben von schweren Getränkekisten in den Warenbehälter erfordert viel Kraft, kann dazu führen, daß sich der Kunde die Finger einklemmt, und nimmt viel Platz in dem Warenbehälter weg, und das Abstellen von Getränkekisten oder dergleichen auf einem unterhalb des Warenbehälters angeordneten Abstellrost ist ebenfalls mühsam. Zudem verleiteten unterhalb des Warenbehälters angeordnete Abstellroste charakterschwache Kunden vielfach zum Ladendiebstahl.

Rückwärtig am Einkaufswagen vorgesehene Ablagen für Getränkekisten oder andere Großgebinde sind in vielfältigen Ausgestaltungen bekannt. Die Fülle der Entwicklungen zeigt dabei, daß es Schwierigkeiten bereitet, sämtliche Anforderungen, die an derartige Ablagen gestellt werden, gleichermaßen gut zu erfüllen. Derartige Anforderungen sind insbesondere die folgenden: Die Ablage darf das Stapeln der Einkaufswagen nicht behindern. Die Ablage soll robust, stabil und kostengünstig sein. Die Ablage soll sich zur Aufnahme unterschiedlich dimensionierter Großgebinde eignen. Die Gefahr, daß sich der Kunde an der Ablage verletzt, soll minimal sein. Die Ablage soll die übrige Funktion des Einkaufswagens möglichst wenig beeinträchtigen, insbesondere nicht zu einer Einschränkung der Brauchbarkeit des Warenbehälters führen. Auch bei beladener Ablage darf die Kippstabilität des Einkaufswagens nicht leiden.

Richtungsweisend für die Entwicklung von Einkaufswagen der gattungsgemäßen Art war der Einkaufswagen gemäß der deutschen Offenlegungsschrift 4303087. Die in ihr offenbarte Ablage zeichnet sich aus durch ein starr an dem Fahrgestell angeordnetes Tragelement mit einem leicht nach hinten geneigten Abstellabschnitt und einen ebenfalls starr an dem Fahrgestell angeordneten, in rückwärtiger Richtung ausgekröpften Anschlagbügel mit zwei seitlichen Schenkeln und einem diese verbindenden Querdraht, wobei der Abstellabschnitt des Tragelements tiefer liegt als die seitlichen Schenkel und der Querdraht des Anschlagbügels. Die aus der deutschen Offenlegungsschrift 4304087 bekannte Ablage zeichnet sich aus durch einen besonders einfachen Aufbau bei einem hohen Maß an Benutzerfreundlichkeit, wozu insbesondere das einfache und kraftschonende Be- und Entladen der Ablage beiträgt.

In Abwandlung der Ablage für Großgebinde, wie sie in der deutschen Offenlegungsschrift 4303087 beschrieben ist, wurde später vorgeschlagen, den Anschlagbügel nicht an den Längsholmen des Fahrgestells, sondern vielmehr an einer die Längsholme miteinander verbindenden Querstrebe zu befestigen (deutsches Gebrauchsmuster 9415414). Des weiteren wurde nach Bekanntwerden der in der deutschen Offenlegungsschrift 4303087 beschriebenen Ablage als Abwandlung davon vorgeschlagen, das Tragelement statt an einem Querholm des Fahrgestells an dem Anschlagbügel zu befestigen (deutsche Gebrauchsmuster 9316018 und 9400873 sowie deutsche Offenlegungsschrift 4436804). Keine dieser Abwandlungen löste sich dabei allerdings von dem in der deutschen Offenlegungsschrift 4304087 beschriebenen Grundprinzip, wonach ein nach hinten ausgekröpfter Anschlagbügel die auf einem benutzerfreundlich nach hinten geneigten Abstellabschnitt abgestellten Großgebinde sowohl seitwärts wie auch in rückwärtiger Richtung gegen Herabfallen sichert.

Wiederum später wurde dann der aus der deutschen Offenlegungsschrift 4303087 bekannte grundsätzliche Aufbau der Ablage abgewandelt, indem eine um eine horizontale Achse verschwenkbare Anlenkung des Anschlagbügels an dem Fahrgestell vorgeschlagen wurde; in diesem Zusammenhang ist das deutsche Gebrauchsmuster 29510349 und die europäische Patentanmeldung 0751057 zu nennen, die den nächstkommenden Stand der Technik repräsentieren, indem sie stapelbare Einkaufswagen der gattungsgemäßen Art offenbaren.

Eingang gefunden hat der erstmals in der deutschen Offenlegungsschrift 4303087 gelehrte, nach hinten ausgekröpfte Anschlagbügel, der der Sicherung von auf dem Abstellabschnitt des Tragelements abgestellten Großgebinden sowohl in seitlicher wie auch in rückwärtiger Richtung dient, darüberhinaus bei den später entwickelten Ablagen gemäß den deutschen Gebrauchsmustern 9407072, 9407469 und 9407471. Hier ist jeweils der Anschlagbügel in der Weise etwa auf halber Höhe des Warenbehälters im Bereich von dessen rückwärtigem Ende gelagert, daß er - durch Eigengewicht oder aber aufgrund Federkraft - auf dem Abstellabschnitt abgestellte Gegenstände zwischen dem Querdraht des Anschlagbügels und der Rückwand des Warenbehälters eingeklemmt und auf diese Weise festhält.

Bei gemäß dem gattungsbildenden Stand der Technik (EP 0751057 A1 und DE 29510349 U1) ausgebildeten Einkaufswagen ist zwar die Gefahr, daß der Anschlagbügel bei nicht benutzter Ablage durch mißbräuchliche Belastung beschädigt wird, reduziert, indem sich der Anschlagbügel sowohl in der Gebrauchsstellung als auch in der Nichtgebrauchsstellung zusätzlich am Fahrgestell abstützt. Allerdings lädt, anders als dies für die Ablage gemäß der DE-OS 4303087 zutrifft, der Abstellabschnitt des Tragelements bei nicht benutzter Ablage und hochgeklapptem Anschlagbügel (insbesondere Jugendliche) dazu ein, sich eben auf jenen Abstellabschnitt zu stellen. Dies zieht die Gefahr nach sich, daß der frei nach hinten auskragende Abstellabschnitt verbogen oder das Tragelement auf sonstige Weise beschädigt wird. Infolge des größeren Hebelarms ist die Gefahr, daß das Tragelement beschädigt wird, bei dem Stand der Technik gemäß der EP-A-0751057 sogar noch größer als die Gefahr einer Beschädigung des Anschlagbügels bei dem Stand der Technik gemäß der DE-OS 4303087.

Ausgehend von dem vorstehend dargelegten Stand der Technik und den mit ihm verbundenen Nachteilen liegt der vorliegenden Erfindung die Aufgabe zugrunde, einen stapelbaren Einkaufswagen der gattungsgemäßen Art zu schaffen, bei dem die Gefahr, daß die Ablage in ihrer Nichtgebrauchsstellung durch unsachgemäße Belastung beschädigt wird, minimal ist.

Gemäß der vorliegenden Erfindung ist diese Aufgabe dadurch gelöst, daß das Tragelement um eine horizontale Achse verschwenkbar mit dem Anschlagbügel verbunden ist. Das Tragelement ist somit nicht starr mit dem Fahrgestell des Einkaufswagens verbunden oder aber auf sonstige Weise ortsfest ausgebildet. Vielmehr ist das Tragelement über eine gelenkige Verbindung an dem Anschlagbügel, insbesondere an dessen Querdraht angeschlossen, wobei die gelenkige Verbindung des Tragelements mit dem Anschlagbügel ein Verschwenken dieser beiden Teile bezüglich einander um eine horizontale, zu der Schwenkachse des Anschlagbügels parallele Achse gestattet. Wird der Anschlagbügel aus seiner Gebrauchsstellung in seine Nichtgebrauchsstellung verschwenkt, so wie dies aus der europäischen Patentanmeldung 0751057 bekannt ist, so wird dabei gleichzeitig das Tragelement aus einer Gebrauchsstellung in eine Nichtgebrauchsstellung bewegt, wobei das Tragelement in seiner Nichtgebrauchsstellung im allgemeinen unterhalb des Warenbehälters liegt und somit gegen mißbräuchliche Belastung geschützt untergebracht ist. Im Ergebnis ist auf diese Weise die Gefahr dafür, daß die Ablage in ihrer Nichtgebrauchslage durch unsachgemäße Belastung oder durch andere Einflüsse beschädigt wird, minimal. Als weiterer Vorteil des erfindungsgemäßen Einkaufswagens gegenüber dem gattungsbildenden Stand der Technik ist die verbesserte Beinfreiheit zu nennen, die die Gefahr, daß sich der den Einkaufswagen schiebende Kunde an der Ablage verletzt, weiter reduziert.

Gemäß einer ersten bevorzugten Weiterbildung der Erfindung erstreckt sich der Anschlagbügel in der Gebrauchsstellung der Ablage in einer im wesentlichen horizontalen oder leicht (bis etwa ± 15°) geneigten Ebene in rückwärtiger Richtung. In diesem Falle, insbesondere bei einer leicht nach hinten ansteigenden Ausführung, können die seitlichen Schenkel des Anschlagbügels vergleichsweise kurz ausgeführt sein, was im Hinblick auf die Statik günstig ist. Der Abstellabschnitt des Tragelements kann dabei vorteilhafterweise in der Gebrauchsstellung der Ablage in rückwärtiger Richtung geneigt sein; dies ist jedoch nicht zwingend.

Eine weitere bevorzugte Weiterbildung der Erfindung zeichnet sich dadurch aus, daß sich das Tragelement in der Gebrauchsstellung der Ablage ausschließlich an dem Anschlagbügel abstützt. Auf diese Weise ergibt sich eine aus besonders wenig Teilen aufgebaute Ablage, die sich auf diese Weise mit relativ geringem Aufwand herstellen läßt. Zudem existieren bei dieser Weiterbildung der Erfindung keinerlei Gleitführungen. Dies ist in mehrfacher Hinsicht günstig; denn Gleitführungen neigen zur Schwergängigkeit aufgrund Verkantens bzw. Verklemmens, und sie verursachen häufig unangenehme Geräusche.

Bei der vorstehend erläuterten Weiterbildung der Erfindung, bei der sich das Tragelement in der Gebrauchsstellung der Ablage ausschließlich an dem Anschlagbügel abstützt, weist gemäß einer weiteren Weiterbildung der Erfindung der Querdraht des Anschlagbügels eine zentrale Auskröpfung auf, an der sich das Tragelement in der Gebrauchsstellung der Ablage abstützt. Die zentrale Auskröpfung weist dabei einen näher bestimmbaren Abstand zu der Schwenkachse des Tragelements auf, um das bei beladener Ablage auf das Tragelement ausgeübte Moment aufzunehmen. Die zentrale Auskröpfung des Querdrahtes des Anschlagbügels kann dabei in der Gebrauchsstellung der Ablage nach unten gerichtet sein und bis unter die Schwenkachse des Tragelements reichen. Dies ist jedoch keineswegs zwingend. Vielmehr sind auch Abwandlungen dieser Gestaltung möglich.

Eine wiederum andere bevorzugte Weiterbildung der Erfindung ist dadurch gekennzeichnet, daß die Ablage einen weiteren Anschlag umfaßt, der in der Gebrauchsstellung der Ablage in Fahrtrichtung vor dem Querdraht des Anschlagbügels angeordnet ist. Der Querdraht des Anschlagbügels, dessen seitliche Schenkel und der weitere Anschlag definieren dabei einen im wesentlichen rechteckigen Raum, der zur Aufnahme von Großgebinden wie Getränkekisten und dergleichen geeignet ist. Der weitere Anschlag verhindert dabei, daß in der Ablage aufgenommene Großgebinde nach vorn von der Abstellfläche des Tragelements herabfallen. Der weitere Anschlag kann dabei ortsfest ausgebildet sein, insbesondere indem er an den Längsholmen des Fahrgestells und/oder an einer die Längsholme des Fahrgestells miteinander verbindenden Querstrebe angeschweißt ist. Dies ist jedoch keineswegs zwingend, wie weiter unten näher erläutert ist. An dem im vorstehenden Sinne ortsfest ausgebildeten weiteren Anschlag kann insbesondere ein weiterer Abstellabschnitt angebracht sein, der im wesentlichen in derselben Ebene liegt wie der Abstellabschnitt des Tragelements in der Gebrauchsstellung der Ablage. In diesem Falle stützt sich eine in der Ablage aufgenommene Getränkekiste oder dergleichen einerseits auf dem Abstellabschnitt des verschwenkbar mit dem Anschlagbügel verbundenen Tragelements und andererseits auf dem mit dem weiteren Anschlag verbundenen weiteren Abstellabschnitt ab. Dies führt zu einer unter statischen Gesichtspunkten besonders günstigen Lastverteilung.

Gemäß einer anderen bevorzugten Weiterbildung der Erfindung ist vorgesehen, daß sich zumindest in der Gebrauchsstellung der Ablage der Abstellabschnitt des verschwenkbar mit dem Anschlagbügel verbundenen Tragelements an dem weiteren Anschlag abstützt. Für diese Weiterbildung der Erfindung gelten die vorstehend erläuterten günstigen statischen Lastverteilungsbedingungen in gleicher Weise. In Betracht kommt dabei insbesondere, daß der Abstellabschnitt des Tragelements auf einem Querdraht des weiteren Anschlags aufliegt, wobei beim Verschwenken des Anschlagbügels von seiner Gebrauchsstellung in seiner Nichtgebrauchsstellung und umgekehrt der Abstellabschnitt des Tragelements auf dem entsprechenden Querdraht des weiteren Anschlags gleitet. Des weiteren kommt eine gelenkige Verbindung zwischen dem Abstellabschnitt des Tragelements und dem entsprechenden Querdraht des weiteren Anschlags in Betracht, was allerdings die verschwenkbare Aufhängung des weiteren Anschlags voraussetzt. Besonders günstig ist es dabei, wenn die gelenkige Verbindung zwischen dem Abstellabschnitt des Tragelements und dem entsprechenden Querdraht des weiteren Anschlags - in der Gebrauchsstellung der Ablage - unterhalb der Schwenkachse des weiteren Anschlags liegt. Denn in diesem Falle kann der Abstellabschnitt des Tragelements auf einem besonders niedrigen Niveau angeordnet sein, was sich (selbst bei beladener Ablage) in einem besonders niedrigen Schwerpunkt und somit in einer hohen Standsicherheit des Einkaufswagens niederschlägt. In diesem Zusammenhang ist zu beachten, daß das Tragelement - von der Seite betrachtet - zweckmäßigerweise eine im wesentlichen L-förmige Gestalt hat, indem der Abstellabschnitt über Streben, die in der Gebrauchsstellung der Ablage nach oben aus der durch den Abstellabschnitt definierten Ebene herausstehen, mit dem Anschlagbügel verbunden ist. Auch dies trägt zu einem tiefen Schwerpunkt und somit einer hohen Standsicherheit des Einkaufswagens bei, selbst wenn die Kistenablage mit schweren Gütern beladen ist.

Im Hinblick auf die Statik der Ablage ist es von Vorteil, wenn bei der vorstehend erläuterten Weiterbildung der Erfindung, bei der sich zumindest in der Gebrauchsstellung der Ablage der Abstellabschnitt des Tragelements an einem weiteren Anschlag abstützt, in der Gebrauchsstellung der Ablage die Schwenkachse des Anschlagbügels unterhalb der Ebene liegt, die durch die Schwenkachse des Tragelements und dessen Abstützung an dem weiteren Anschlag definiert ist. Dies gilt namentlich dann, wenn in der Gebrauchsstellung der Ablage eine Auskröpfung oder ein sonstiger Vorsprung des Tragelements an einem Gegenlager des weiteren Anschlags anliegt. Denn in diesem Falle wird die Abstützung des Anschlagbügels an dem Fahrgestell dadurch entlastet, daß ein Teil der Kraft über das Tragelement in den weiteren Anschlag eingeleitet wird.

Im folgenden wird die vorliegende Erfindung anhand verschiedener in der Zeichnung dargestellter bevorzugter Ausführungsbeispiele näher erläutert. Dabei sind jeweils in perspektivischer Ansicht von hinten-rechts-oben verschiedene Ablagen für Großgebinde, jeweils in ihrer Gebrauchsstellung, dargestellt.

Die Längsholme 1 des konventionell aufgebauten Fahrgestells des Einkaufswagens besitzen rückwärtige Abschnitte 2, an denen um eine horizontale, quer zur Fahrtrichtung verlaufende Achse 3 verschwenkbar (Doppelpfeil A) der Anschlagbügel 4 gelagert ist. Der Anschlagbügel besitzt dabei zwei seitliche Schenkel 5 und einen hinteren Querdraht 6. Er erstreckt sich in einer im wesentlichen horizontalen Ebene in rückwärtiger Richtung von den hinteren Abschnitten 2 der Längsholme 1 des Fahrgestells weg.

An dem Anschlagbügel 4 ist, um eine zur Schwenkachse 3 des Anschlagbügels 4 parallele Achse 7 schwenkbar (Doppelpfeil B), das Tragelement 8 gelagert. Dieses umfaßt einen leicht nach vorne ansteigenden Abstellabschnitt 9 und Streben 10, die in der Gebrauchsstellung der Ablage nach oben aus der durch den Abstellabschnitt 9 definierten Ebene herausstehen und an dem Anschlagbügel 4 angelenkt sind.

Die Ablage umfaßt jeweils einen weiteren Anschlag 11, der so angeordnet ist, daß er sich zumindest in der Gebrauchsstellung der Ablage in Fahrtrichtung vor dem Querdraht 6 des Anschlagbügels 4 befindet. In diesem Umfang besteht Übereinstimmung zwischen sämtlichen in der Zeichnung dargestellten Varianten der Ablage.

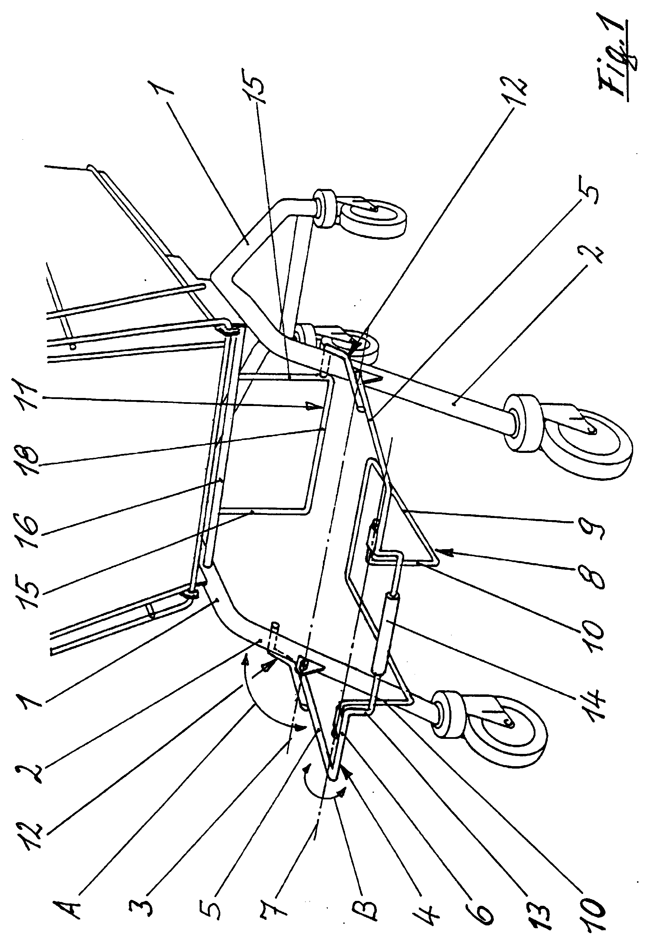

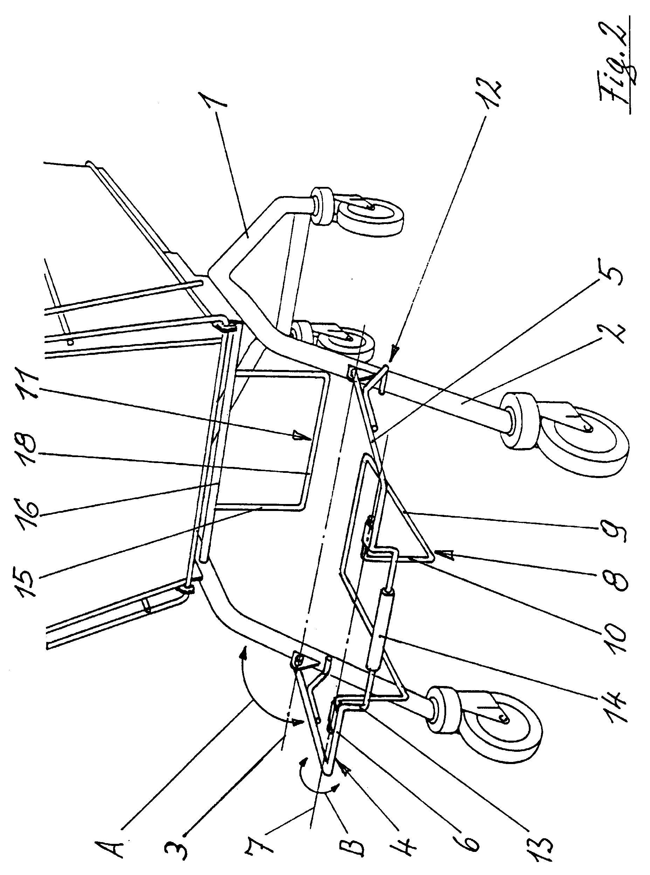

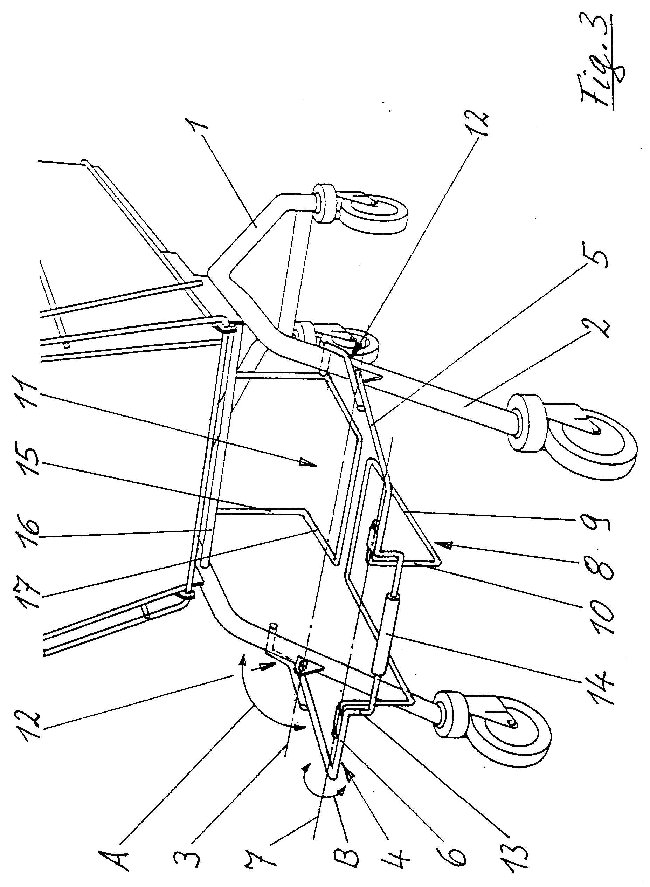

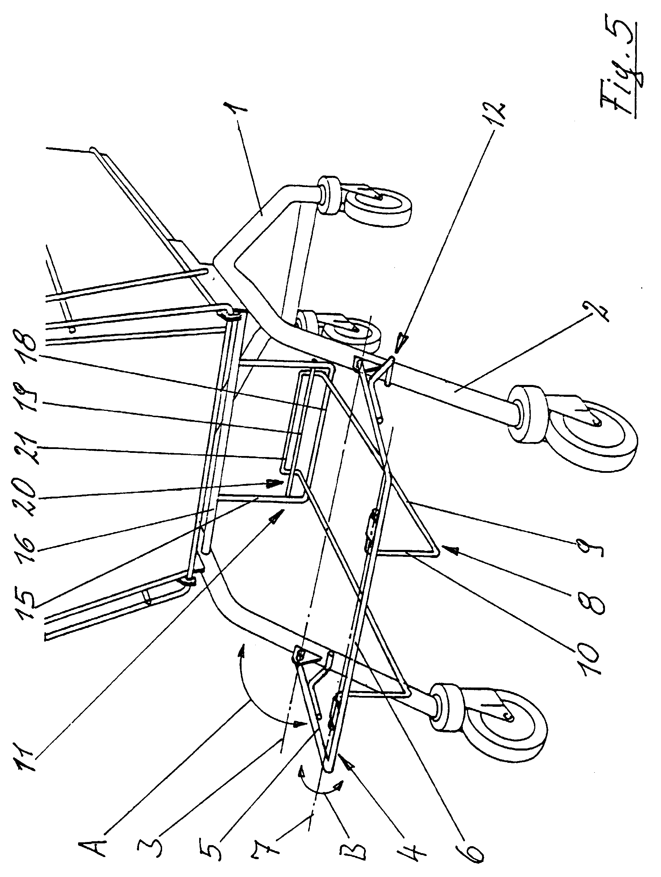

Die der Gebrauchsstellung der Ablage entsprechende Stellung des Anschlagbügels 4 ist durch zwei Anschläge 12 definiert, die sich an den rückwärtigen Abschnitten 2 der Fahrgestell-Längsholme 1 abstützen. Bei der in Fig. 1 dargestellten Ablage umgreifen die Anschläge 12 dabei die rückwärtigen Abschnitte 2 der Fahrgestell-Längsholme 1, d.h. sie liegen in der Gebrauchsstellung der Ablage an der (in Fahrtrichtung) Vorderseite der rückwärtigen Abschnitte 2 der Fahrgestell-Längsholme 1 an, und zwar oberhalb der Schwenkachse 3; entsprechendes gilt für die Ablagen gemäß den Figuren 3, 4 und 6. Eine alternative Ausgestaltung der Anschläge 12 ist in den Figuren 2 und 5 gezeigt; hier stützt sich der jeweilige Anschlag 12, ohne den hinteren Abschnitt 2 des betreffenden Fahrgestell-Längsholmes 1 zu umgreifen, auf dessen (in Fahrtrichtung) Rückseite ab, und zwar unterhalb der Schwenkachse 3.

Bei der Ablage gemäß Fig. 1 stützt sich das Tragelement in der Gebrauchsstellung der Ablage ausschließlich an dem Anschlagbügel 4 ab. Hierzu verfügt der hintere Querdraht 6 des Anschlagbügels 4 über eine zentrale Auskröpfung 13, die in der Gebrauchsstellung der Ablage nach unten gerichtet ist und bis unter die Schwenkachse 7 des Tragelements 8 reicht. An dieser zentralen Auskröpfung 13 stützen sich die Streben 10 des Tragelements 8 in der Gebrauchsstellung der Ablage ab. Auf die zentrale Auskröpfung 13 des Anschlagbügels 4 ist im übrigen ein Handgriff 14 aufgesetzt. Entsprechendes gilt für die Ablagen gemäß den Figuren 2, 3 und 6.

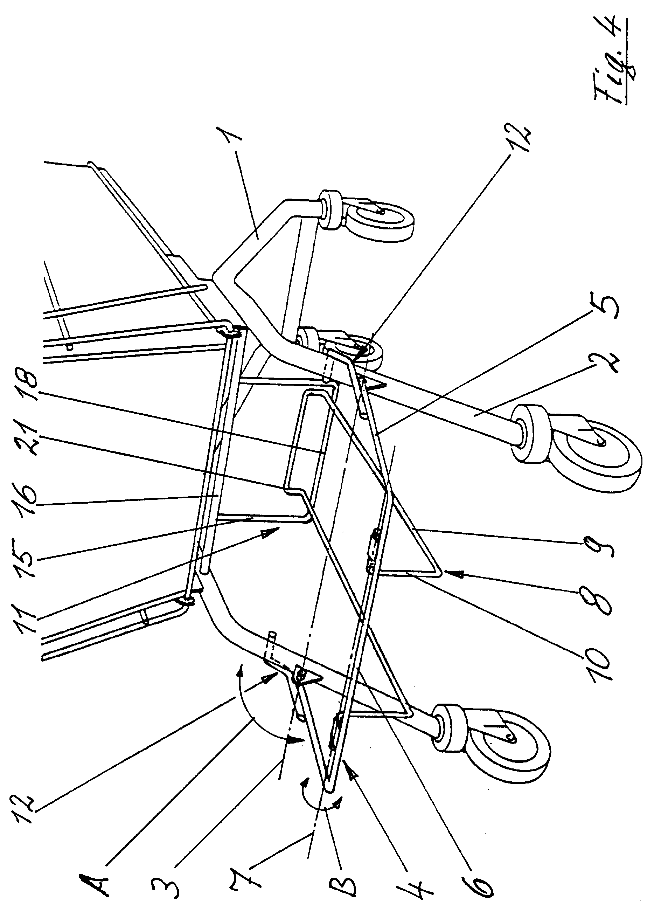

Bei den Ablagen gemäß den Figuren 4, 5 und 6 stützt sich demgegenüber das Tragelement 8 nicht allein an dem Anschlagbügel 4 ab, sondern vielmehr zusätzlich auch an dem weiteren Anschlag 11. Insoweit ist hier die vorstehend erläuterte zentrale Auskröpfung 13 des Querdrahts 6 des Anschlagbügels 4 oder eine vergleichbare Einrichtung, die zur Übertragung eines Moments von dem Tragelement 8 auf den Anschlagbügel 4 geeignet ist, entbehrlich. Die gemaß den Figuren 4, 5 und 6 vorgesehene Abstützung des Tragelements 8 an dem weiteren Anschlag 11 wird weiter unten näher erläutert.

Gemäß Fig. 1 ist der weitere Anschlag 11 U-förmig ausgebildet, wobei die beiden nach oben ragenden Schenkel 15 mit einer Querstrebe 16 verbunden sind, die sich zwischen den Längsholmen 1 des Fahrgestells erstreckt und mit diesen fest verbunden ist. Der Abstand zwischen den beiden Schenkeln 15 des weiteren Anschlags 11 ist dabei so bemessen, daß der weitere Anschlag beim Stapeln zweier Einkaufswagen zwischen den vorderen Abschnitten der Längsholme eines - sich nach vorn verjüngenden - Fahrgestells eines weiteren, hinteren Einkaufswagens Platz findet. Entsprechendes gilt für die Ablagen gemäß den Figuren 2 bis 5.

Die Ablage gemäß Fig. 3 unterscheidet sich von derjenigen gemäß Fig. 1 durch eine andersartige Ausführung des weiteren Anschlags 11. An diesem ist gemäß Fig. 3 ein weiterer Abstellabschnitt 17 angebracht, der im wesentlichen in derselben Ebene liegt wie der Abstellabschnitt 9 des Tragelements 8 in der - in der Zeichnung dargestellten - Gebrauchsstellung der Ablage. Die Last eines in der Ablage aufgenommenen Großgebindes wird auf diese Weise zu gleichen Teilen über den Anschlagbügel 4 und den weiteren Anschlag 11 in das Fahrgestell des Einkaufswagens eingeleitet.

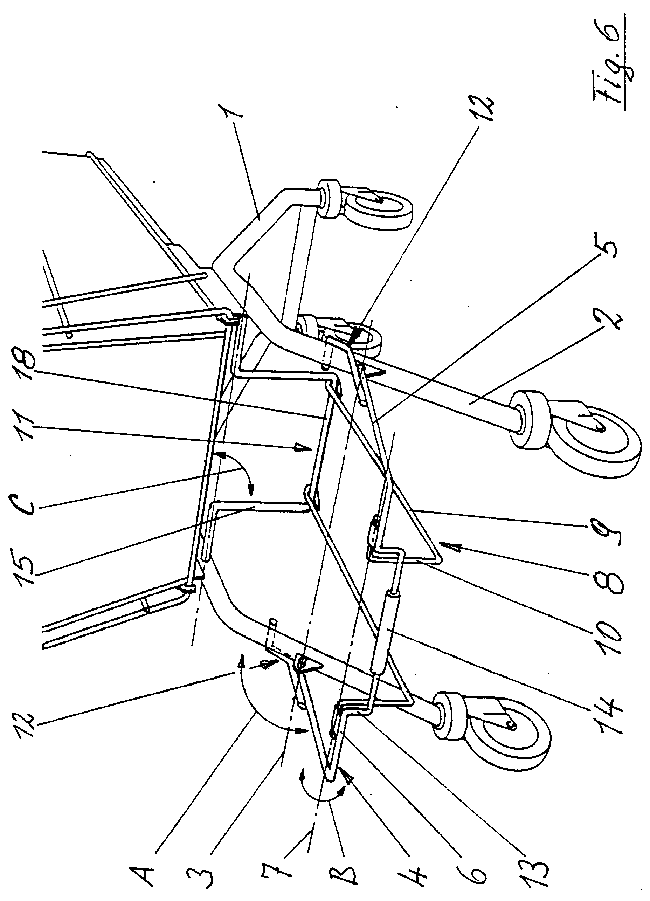

Die Figuren 4 bis 6 veranschaulichen verschiedene Möglichkeiten, wie sich das Tragelement zusätzlich an dem weiteren Anschlag 11 abstützen kann. Gemäß den Figuren 4 und 5 liegt das Tragelement 8 dabei mit seinem Abstellabschnitt 9 auf einem Querdraht 18 des weiteren Anschlags 11 auf. Wird der Anschlagbügel 4 verschwenkt (Doppelpfeil A), um die Ablage von ihrer Gebrauchsstellung in ihre Nichtgebrauchsstellung oder umgekehrt zu bringen, so gleitet der Abstellabschnitt 9 des Tragelements 8 auf dem Querdraht 18 des weiteren Anschlags 11. Nachdem hier allerdings keine Führung im engeren Sinne vorliegt, ist ein Verklemmen praktisch ausgeschlossen. Der weitere Anschlag ist gemäß den Figuren 4 und 5 ortsfest ausgebildet, indem - wie bereits weiter oben dargelegt wurde - die beiden Schenkel 15 des weiteren Anschlags 11 mit einer Querstrebe 16 fest verbunden sind, welche sich zwischen den beiden Längsholmen 1 des Fahrgestells erstreckt und mit diesem fest verbunden ist. Alternativ hierzu könnte der weitere Anschlag 11 als nach unten ausgekröpfter Bügel (vgl. Fig. 6) ausgebildet sein, wodurch die Querstrebe 16 überflüssig würde. Neben der andersartigen Ausgestaltung des Anschlags 12 für den Anschlagbügel 4 (siehe oben), unterscheidet sich die Ablage gemäß Fig. 5 von denjenigen gemäß Fig. 4 dadurch, daß sich oberhalb des Querdrahtes 18 ein weiterer Querdraht 19 zwischen den Schenkeln 15 des weiteren Anschlags 11 erstreckt. Dieser weitere Querdraht 19 bildet ein Gegenlager 20 für die endseitige Auskröpfung 21 des Abstellabschnitts 9 des Tragelements 8. In der Gebrauchsstellung der Ablage liegt die Auskröpfung 21 des Tragelements 8 an dem weiteren Querdraht 19 des weiteren Anschlags 11 an; auf diese Weise ist sicher gewährleistet, daß sich das Tragelement 8 selbst bei nur geringem Überstand stets auf dem Querdraht 18 des weiteren Anschlags 11 abstützt. Entsprechendes ließe sich bei der Variante gemäß Fig. 4 beispielsweise dadurch erreichen, daß benachbart zu der nach oben gerichteten Auskröpfung 21 des Abstellabschnitts 9 des Tragelements 8 nach unten gerichtete Auskröpfungen vorgesehen sind, welche in der Gebrauchsstellung der Ablage den Querdraht 18 des weiteren Anschlags 11 hintergreifen.

Gemäß Fig. 6 ist der weitere Anschlag 11 als doppelt gekröpfter Bügel ausgestaltet, welcher um die horizontale Achse 22 verschwenkbar (Doppelpfeil C) an den Längsholmen 1 des Fahrgestells aufgehängt ist. Der Abstellabschnitt 9 des Tragelements 8 ist dabei mit dem Querdraht 18 des weiteren Anschlags 11 gelenkig verbunden, wobei die Schwenkachse mit der Achse des Querdrahts 18 zusammenfällt. Im übrigen geht der Aufbau der Ablage gemäß Fig. 6 aus den vorstehenden Erläuterungen der übrigen Figuren hervor.

## Patentansprüche

1. Stapelbarer Einkaufswagen mit einem Fahrgestell, einem auf diesem befestigten Warenbehälter und einer rückwärtigen Schiebeeinrichtung, wobei im rückwärtigen Bereich des Einkaufswagens eine für die Beförderung von Großgebinden geeignete Ablage vorgesehen ist, die eine Gebrauchsstellung und eine Nichtgebrauchsstellung einnehmen kann und ein Tragelement (8) mit einem Abstellabschnitt (9) und einen um eine horizontale Achse (3) verschwenkbar an dem Fahrgestell angelenkten Anschlagbügel (4) mit zwei seitlichen Schenkeln (5) und einem diese verbindenden Querdraht (6) umfaßt, wobei der Abstellabschnitt (9) des Tragelements (8) in der Gebrauchsstellung der Ablage zumindest bereichsweise tiefer liegt als die seitlichen Schenkel (5) und der Querdraht (6) des Anschlagbügels (4),
dadurch gekennzeichnet,
daß das Tragelement (8) um eine horizontale Achse (7) verschwenkbar mit dem Anschlagbügel (4) verbunden ist.

2. Einkaufswagen nach Anspruch 1,
dadurch gekennzeichnet,
daß sich der Anschlagbügel (4) in der Gebrauchsstellung der Ablage in einer im wesentlichen horizontalen Ebene in rückwärtiger Richtung erstreckt.

3. Einkaufswagen nach Anspruch 1 oder Anspruch 2,
dadurch gekennzeichnet,
daß der Abstellabschnitt (9) des Tragelements (8) in der Gebrauchsstellung der Ablage in rückwärtiger Richtung geneigt ist.

4. Einkaufswagen nach einem der Ansprüche 1 bis 3,
dadurch gekennzeichnet,
daß sich das Tragelement (8) in der Gebrauchsstellung der Ablage ausschließlich an dem Anschlagbügel (4) abstützt.

5. Einkaufswagen nach einem der Ansprüche 1 bis 4,
dadurch gekennzeichnet,
daß der Querdraht (6) des Anschlagbügels (4) eine zentrale Auskröpfung (13) aufweist, an der sich das Tragelement (8) in der Gebrauchsstellung der Ablage abstützt.

6. Einkaufswagen nach Anspruch 5,
dadurch gekennzeichnet,
daß die zentrale Auskröpfung (13) in der Gebrauchsstellung der Ablage nach unten gerichtet ist und bis unter die Schwenkachse (7) des Tragelements (8) reicht.

7. Einkaufswagen nach einem der Ansprüche 1 bis 6,
dadurch gekennzeichnet,
daß die Ablage einen weiteren Anschlag (11) umfaßt, der in der Gebrauchsstellung der Ablage in Fahrtrichtung vor dem Querdraht (6) des Anschlagbügels (4) angeordnet ist.

8. Einkaufswagen nach Anspruch 7,
dadurch gekennzeichnet,
daß der weitere Anschlag (11) ortsfest ausgebildet ist.

9. Einkaufswagen nach Anspruch 8,
dadurch gekennzeichnet,
daß an dem weiteren Anschlag (11) ein weiterer Abstellabschnitt (17) angebracht ist, der im wesentlichen in derselben Ebene liegt wie der Abstellabschnitt (9) des Tragelements (8) in der Gebrauchsstellung der Ablage.

10. Einkaufswagen nach Anspruch 7 oder Anspruch 8,
dadurch gekennzeichnet,
daß sich zumindest in der Gebrauchsstellung der Ablage der Abstellabschnitt (9) des Tragelements (8) an dem weiteren Anschlag (11) abstützt.

11. Einkaufswagen nach Anspruch 10,
dadurch gekennzeichnet,
daß in der Gebrauchsstellung der Ablage die Schwenkachse (3) des Anschlagbügels (4) unterhalb der Ebene liegt, die durch die Schwenkachse (7) des Tragelements (8) und dessen Abstützung an dem weiteren Anschlag (11) definiert ist.

12. Einkaufswagen nach Anspruch 10 oder Anspruch 11,
dadurch gekennzeichnet,
daß in der Gebrauchsstellung der Ablage eine Auskröpfung (21) oder ein sonstiger Vorsprung des Tragelements (8) an einem Gegenlager (20) des weiteren Anschlags (11) anliegt.

13. Einkaufswagen nach einem der Ansprüche 1 bis 12,
dadurch gekennzeichnet,
daß das Tragelement (8) eine im wesentlichen L-förmige Gestalt hat, indem der Abstellabschnitt (9) über Streben (10), die in der Gebrauchsstellung der Ablage nach oben aus der durch den Abstellabschnitt (9) definierten Ebene herausstehen, mit dem Anschlagbügel (4) verbunden ist.
